# EUROPEAN PATENT APPLICATION

(11) **EP 4 842 032 A1**
(43) Date of publication of application: **18.11.2026**
(21) Application number: 25176911.3
(22) Date of filing: 16.05.2025
(51) Int. Cl.: H04W 12/71, H04W 12/03, H04W 4/38, H04W 4/48, H04L 67/12, H04Q 9/00

(54) **MESSAGE PAYLOAD SEQUENCING FUNCTION FOR ADDRESSING PURPOSE**

(71) Applicant: Analog Devices International Unlimited Company, Limerick (IE)
(72) Inventor: SIMON, Jeffrey James, Wilmington, 01887 (US); POO, Tze Lei, Limerick (IE); MADALA, Sadasiva Rao, Limerick (IE); DWIVEDI, Sachin, Limerick (IE); SUBRAMANYA, Gokul, Limerick (IE); FAZIO, Matthew, Limerick (IE); TAMAS, Daniel, Limerick (IE)
(74) Representative: Horler, Philip John

(57) **Abstract**

A command counter (CC) is typically used for flow checking of program sequences. The CC can also be leveraged for message payload sequencing for addressing purposes. This approach can be used to identify the source of functionally safe data from a battery monitor. By generating offsets in the CC value without impacting the overall command flow, the CC addressing technique can provide authentication of the data source without requiring significant modifications to existing wireless battery management systems.

## Description

### TECHNICAL FIELD

The present disclosure generally relates to a wireless Battery Management System (WBMS), in particular addressing techniques utilized in the WBMS.

### BACKGROUND

Electric cars have been gaining immense popularity. One factor facilitating adoption of electric vehicles has been improvement in battery management. Using a WBMS, electric cars may monitor battery levels and communicate that information to a host system, which in turn can operate the car more reliably and efficiently.

In the realm of WBMS, ensuring the functional safety of communication between battery pack nodes and the host system presents a significant challenge. Some conventional systems often rely on incorporating distinct identifiers within safety data payloads to verify the source of data. However, this approach can necessitate significant modifications to existing systems, which may not be feasible due to technical or commercial constraints.

### BRIEF DESCRIPTION OF THE DRAWINGS

Various ones of the appended drawings merely illustrate example embodiments of the present disclosure and should not be considered as limiting its scope.
FIG. 1 illustrates a block diagram of a wireless battery management system (WBMS).
FIG. 2 shows an example of a message from a BMS monitor to a wireless node.
FIG. 3 shows an example of a consolidated message generated by a wireless node.
FIG. 4 shows an example of an encrypted message for transmission from a wireless node to a dual network manager.
FIG. 5 is a flow diagram of method to matching BMS monitor data using command counter (CC) offsets.
FIG. 6 is an example of a table of expected CC values.

### DETAILED DESCRIPTION

The WBMS may include a plurality of battery modules (or nodes) that may each be connected to battery monitors each with multiple registers of battery cell data communicated via safety data payloads. However, to increase functional safety, the host system may have a need to verify the battery cell source of each safety payload, which can present challenges. The present disclosure addresses these challenges by introducing a message payload offset and sequencing using a command counter (CC) for addressing purposes. This approach leverages the existing command counter mechanism, typically used for flow checking of program sequences, to identify the source of functionally safe data in a distinct manner. By generating offsets in the CC value without impacting the overall command flow, the disclosed techniques provide authentication of the data source without requiring significant modifications to the existing system. This approach not only maintains the integrity and reliability of the system but also simplifies the process, reducing provisioning time and steps.

In some examples, a serial ID of the first battery monitor device connected to a wireless node may be read and CC offsets may be generated for each of the battery monitor devices connected to the node. The host system may generate and store a look up table to verify battery monitor source device based upon the combined serial ID and CC offset where the data originated for each safety payload. This technique allows the host system to authenticate source of data without introducing new features or modifications to the battery monitor integrated circuit devices.

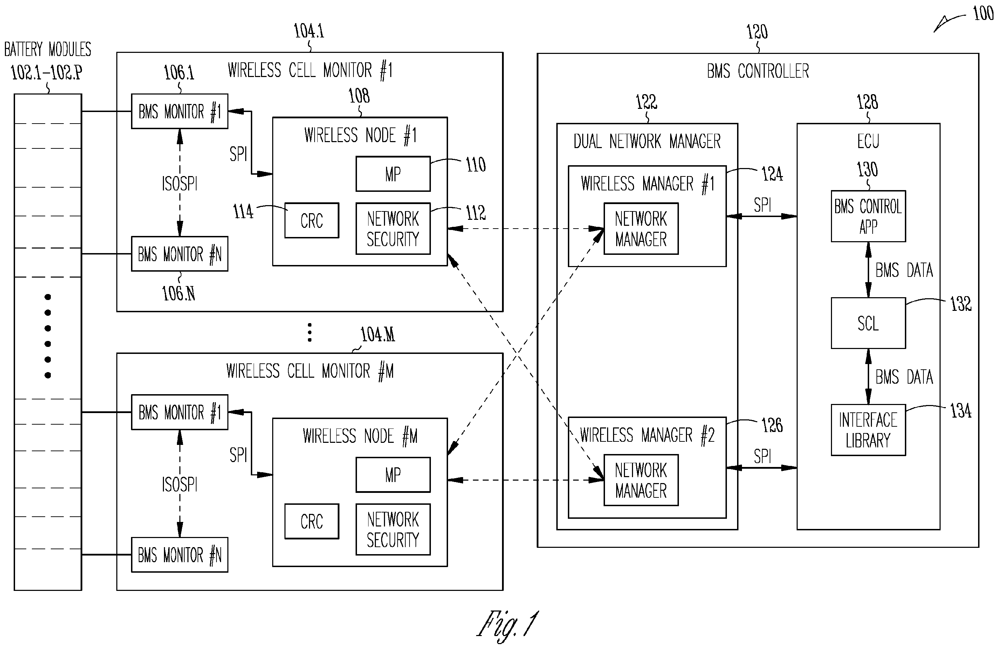

FIG. 1 illustrates a block diagram of a WBMS 100. The WBMS 100 may include a plurality of battery modules 102.1-102.p, each including a plurality of battery cells. For example, the battery modules 102.1-102.p may include lithium-ion batteries. Batteries with different specifications, sizes, and shapes may be used. Each module may be coupled to a respective wireless cell monitor 104.1-104.m. The WBMS 100 may also include a BMS controller 120 with a dual network manager 122 and an Electronic Control Unit (ECU) 128.

Each wireless cell monitor 104.1-104.m may include a plurality of BMS monitors 106.1-104.n and a wireless node 108. Each of the plurality BMS monitors 106.1-104.n may be coupled to a respective battery module. For example, BMS monitor 106.1 may be coupled to a respective battery module 102.1 and may monitor various conditions or properties of the battery module 102.1. The BMS monitor 106.1 may be provided as an integrated circuit, which can include a monolithically integrated BMS circuit or an integrated module including multiple integrated circuit die or other circuit elements within a commonly-shared integrated circuit device package, as illustrative examples.

The BMS monitors 106.1-106.n may each include a variety of sensors. For example, the BMS monitor 106.1 may sample the battery voltage to monitor the battery level of the respective battery module. The BMS monitor 106.1 may also monitor other parameters of the battery module, such as the current and the external surface temperature.

The BMS monitors 106.1-106.n may be coupled in a serial, wired fashion from module to module, e.g., daisy chained from module to module with the last BMS monitor 106.n providing a termination point for the cabling. For example, the communication interface between the BMS monitors 106.1-106.n may include isolated (transformer) communication cabling, such as implementing an Isolated Serial Peripheral Interface (isoSPI). The communication cabling may be connected in a serial fashion.

The BMS monitors 106.1-106.n may transmit battery measurements taken of the battery cells therein to the wireless node 108. The measurements may be transmitted periodically (e.g., every 100 milliseconds) and/or in response to a request from the wireless node 108. As described in further detail below, the measurements may be taken based on a script.

The BMS monitors 106.1-104.n may be coupled to a wireless node 108 by a communication interface, for example by a Serial Peripheral Interface (SPI) or the like. In some examples, the BMS monitor 106.1 and the wireless node 108 may be provided on a single printed circuit board (PCB). The wireless node 108 may include a wireless system on chip (SoC), which may include a radio transceiver to communicate with the dual network manager 122 over a wireless network.

The wireless node 108 may include a microprocessor 110, a network security module 112, and a cyclic redundancy check (CRC) component 114. The microprocessor 110 may run a BMS application based on control information (e.g., script) received from the dual network manager 122. The wireless node 108 may include a memory (not shown) to store the BMS application and other information for operating the wireless node 108. The network security module 112 may encrypt and decrypt communication between the wireless node 108 and the dual network manager 122.

Each wireless cell monitor 104.1-104.m may communicate with the dual network manager 122 over a wireless network. The wireless network may be provided as a mesh network or the like. The wireless network may be provided using short range wireless communication networks, for example at ~2.4 GHz, using time-synchronous frequency hopping (TSFH). The dual network manager 122 may act like a master node and the wireless cell monitors 104.1-104.m may act like slave nodes. If a wireless cell monitor 104.1-104.m is released by the dual network manager 122 or is disconnected, it may search for a new network manager. The wireless network may be a secure network. For example, before the wireless cell monitors 104.1-104.m communicate with a new network manager, a secure connection may be established by using, for example, a certificate validation.

The dual network manager 122 may include a first manager 124 and a second manager 126 to communicate with the wireless clusters 104.1-104.m. The first manager 124 and second manager 126 may be provided as wireless SOCs.

The network manager 122 may be coupled to the ECU 128 via a communication interface, such as SPI. The ECU may be part of a host system. The ECU 128 may include a BMS Control application 130, safety communication layer (SCL) 132, and interface library 134 to control operation of the WBMS 100.

The ECU 128 may generate control data for operating the different wireless cell monitors 104.1-104.m. The dual network manager 122 may transmit the control data to the wireless cell monitors 104.1-104.m in a periodic manner. The control data may include script information, such as modifications to scripts. Scripts may be uploaded to and maintained in the wireless node 108. In some examples, scripts may be uploaded during manufacturing or servicing of the EV. A script may include a sequence of SPI commands used to communicate to each of the BMS monitors 106.1-104.n on the daisy-chain to retrieve battery parameters, such as voltage, current, temperature, etc. The retrieved battery parameters may then be transmitted from the BMS monitor 104.1 to the wireless node 108, for example, over the SPI.

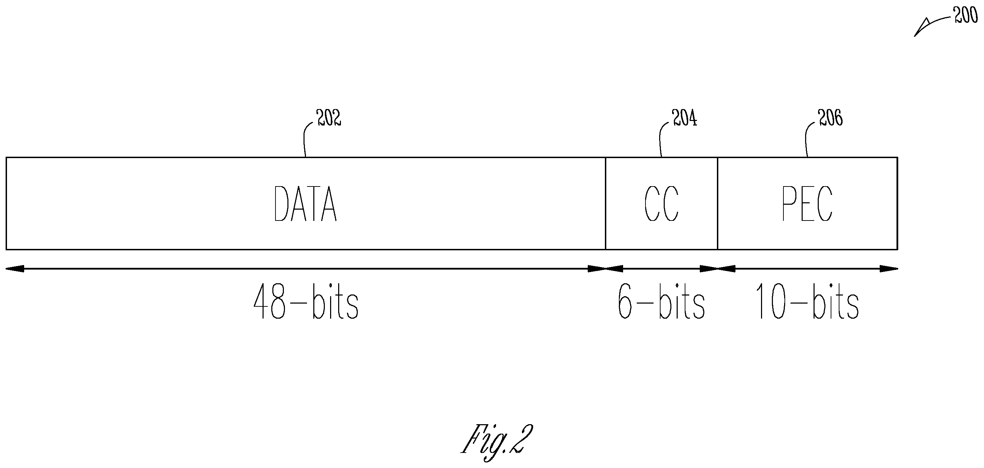

FIG. 2 shows an example of a message 200 from a BMS monitor to a wireless node. The message 200 may be a safety protocol data unit (SPDU). The message 200 may be transmitted over SPI from the BMS monitor 106.1 to the wireless node 108. The message 200 may include a data portion 202, a CC portion 204, and a packet error checking (PEC) portion 206. In some examples, the data portion 202 may include 48 bits, the CC portion 204 may include 6 bits and the PEC portion may include 10 bits.

The CC may track execution of certain commands. For example, the CC may be incremented, for example by 1, if the respective BMS monitor receives a valid non-read or non-reset command (e.g., write or action). If the CC exceeds a maximum value, then the CC may roll over to a rollover value. Use of the CC can enhance ability to detect data timeliness and data authenticity faults.

In some examples, the serial ID of a BMS monitor may be transmitted in the data portion 202; however, no other data, such as battery performance data, can be transmitted with the serial ID because of the length of the data portion 202. Also, messages following the serial ID message may not originate from the same battery monitor. Because the BMS monitors 106.1-104.n are daisy-chained, the wireless node 108 may not be able to determine from which battery monitor the message originated. As described in further below, the CC portion 204 may be used to track the source of the originating BMS monitor.

The wireless node 108 may receive a plurality of messages (e.g., plurality of message 200) from the different BMS monitors 106.1-106.n. In some examples, the wireless node 108 may transmit a command to request data from the BMS monitors 106. The wireless node 108 may aggregate the data from the BMS monitors 106.1-106.n and generate a consolidated message. The wireless node 108 may transmit the consolidated data periodically (e.g., every 100 milliseconds) to the dual network manager 122.

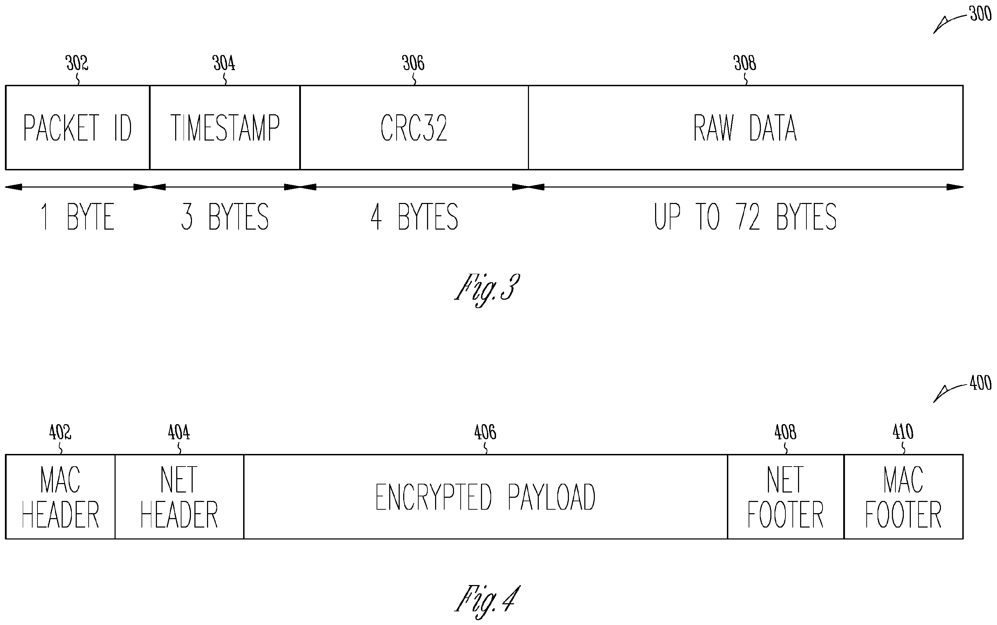

FIG. 3 shows an example of a consolidated message 300 generated by a wireless node. The consolidated message 300 may include a packet ID 302, timestamp 304, CRC portion 306, and a raw data portion 308. The packet ID 302, timestamp 304, and CRC portion 306 may be added by the wireless node. The raw data portion 308 may include consolidated data received from the daisy-chained battery monitors 106.1-106.n. The raw data portion may include data portion 202 and CC portion 204 from messages received from the BMS monitors. The wireless node 108 may encrypt the consolidated message 300 to transmit to the dual network manager 122. For example, the consolidated message 300 may include consolidated SPDU data received from the daisy-chained battery monitors 106.1-106.n. As described in further detail below, the SPDU data remains intact until the consolidated message 300 is delivered to the SCL 132 endpoint, thus maintaining safety integrity.

FIG. 4 shows an example of an encrypted message 400 for transmission from a wireless node to a dual network manager. Encrypted message 400 may include MAC header 402, net header 404, encrypted payload 406, net footer 408, and MAC footer 410. The encrypted payload 406 includes the encrypted contents (e.g., collection of SPDUs) of the consolidated message 300. The MAC header 402 may identify the wireless node 108. The encrypted message 400 may be transmitted to the dual network manager 122 and decrypted to reveal consolidated message 300. The data from the consolidated message 300 may then be transmitted to the ECU 128. However, as mentioned above, the battery data may not be associated with unique BMS monitor identification information, such as the serial ID of the BMS monitor, so that the ECU 128 may not be able to match the data to a particular BMS monitor.

Next, techniques for using the CC to identify the originating source (BMS monitor) of the data. The BMS monitors coupled to a particular wireless node may be assigned a CC offset. The CC value may then be used to identify the originating BMS monitor.

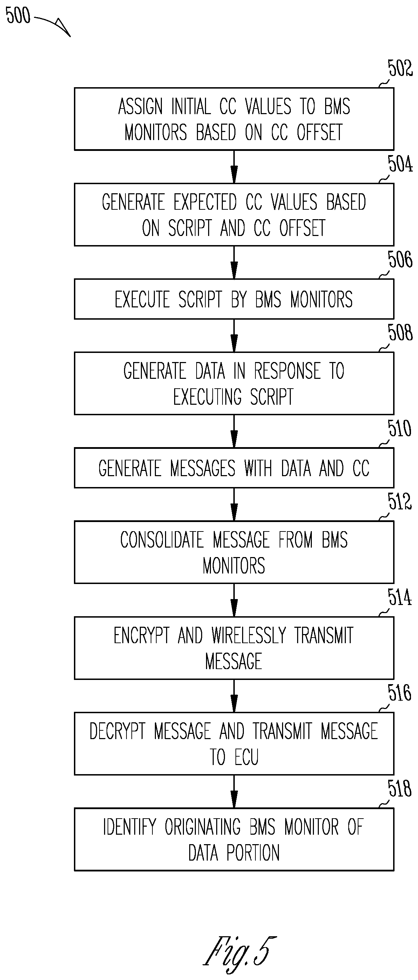

FIG. 5 is a flow diagram of method 500 to matching BMS monitor data using CC offsets. In some examples, method 500 may be performed by the WBMS 100 as described above.

At operation 502, each BMS monitor coupled to a wireless node is assigned a different initial value based on a CC offset. For example, the CC values for the battery monitors may be offset by a value 1. In this example, a first BMS monitor may be assigned an initial CC value of 1, a second BMS monitor may be assigned an initial CC value of 2, a third BMS monitor may be assigned an initial CC value of 3, and so on. In some examples, the serial ID of the fist battery monitor may be read, and the CC offsets may be generated for each of the battery monitor devices connected to the wireless node accordingly.

At operation 504, the ECU generates expected CC values of the different BMS monitors after different commands in a script based on a script and the CC offset. For example, the SCL in the ECU may generat expected CC values for an expected script based on the length (i.e., number of non-read/ non-reset commands within the script) and the sequence of the script executions (in the case of multiple scripts). For example, after the first command, the expected CC value for the first BMS monitor is 2, the expected CC value for the second BMS monitor is 3, the expected CC value for the third BMS monitor is 4, and so on. The expected CC values may be stored in the ECU. In some examples, the expected CC values may be stored as a look up table.

At operation 506, the script uploaded and stored in the wireless node is executed by the BMS monitors. In some examples, the wireless node may have more than one script uploaded and stored.

At operation 508, the battery monitors generate data in response to executing the script. For example, the BMS monitors may gather battery measurement data based on the executing the script, such as sampling battery voltage, current, surface temperature, etc.

At operation 510, the battery monitors generate messages with corresponding CC portions. Each message may include the data generated by the battery monitors (e.g., message 200) in response to executing the commands in the script. For example, the messages may include battery parameter information, such as voltage, current, temperature, sampled in response to executing the script. Each message may also have a CC portion that is incremented by a subset or specified commands (e.g., non-read/non-reset commands) in the script.

At operation 512, the wireless node consolidates messages from the BMS monitors, which may be received over SPI. At operation 514, the wireless node encrypts the consolidated message and transmits the encrypted message wirelessly to the dual network manager. At operation 516, the encrypted message is decrypted by the dual network manager and transmitted to the ECU, for example, over the SPI.

At operation 518, the ECU identifies an originating source of the data portion of a message based on matching the CC value of the message to an expected CC value. For example, the ECU may use the lookup table to verify the source of each payload based on matching CC value associated with the payload and an expected CC value in the lookup table. Thus, the ECU may analyze the received data to monitor battery health and performance with more accuracy by knowing which battery monitor is the source of the battery information. The ECU may then use the data for improving decision making and controlling operations.

In some examples, the SCL in the ECU may use the CC values to verify the data is arriving from the correct source, on time, and without data integrity faults. The SCL may use the ECU and other information in combination to determine the unique BMS monitor and wireless node as the source of the data. In some examples, the SCL may use the CC offset plus the serial ID to identify which wireless node and BMS monitor coupled to that wireless node is the source. In some examples, the SCL may use the CC offset plus the PEC seed value to identify which wireless node and BMS monitor coupled that wireless node is the source.

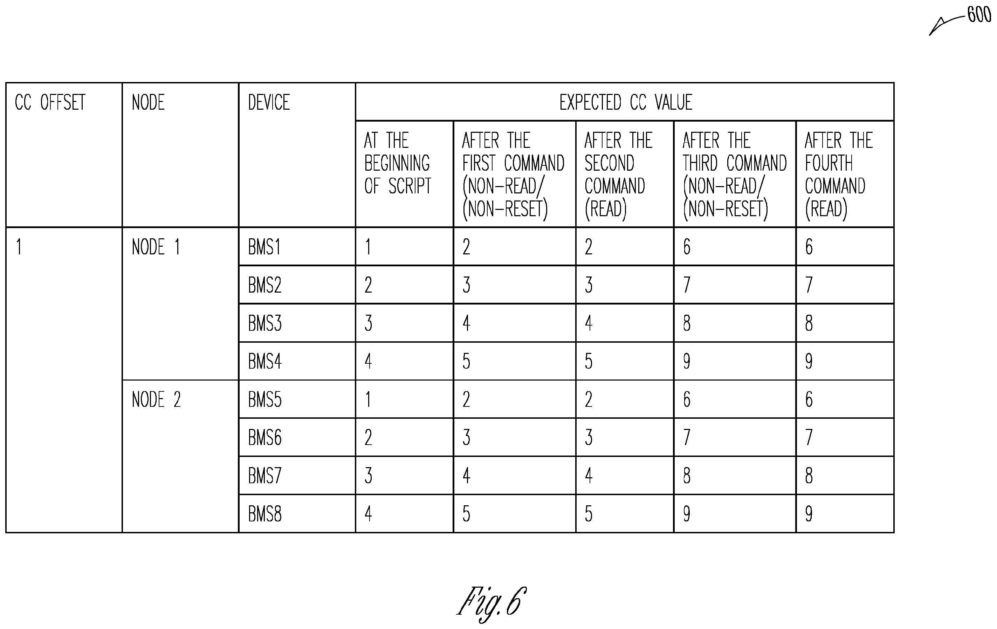

FIG. 6 is an example of a table 600 of expected CC values. In this example, the CC offset is set at 1. Wireless Node1 has four BMS monitors, BMS1-BMS4. Wireless Node2 also has four BMS monitors, BMS5-BMS8. In some examples, the different wireless nodes may be identified by BMS controller using MAC header information. However, in these examples, the identity of which BMS monitor coupled to the wireless node may not be readily discernable without the use of the CC offset technique described herein. In some examples, the MAC header may not be a suitable safety mechanism to identify the wireless node. In these examples, the wireless node may be identified based on the serial ID or the PEC seed value, as described above.

The table shows expected CC values at different times, such as at the beginning of the script, after the first command (non-read/non-reset), after the second command (read), after the third command (non-read), and after the fourth command (read). As shown, the CC is incremented after the first and third commands, but not the second and fourth commands because those commands are read commands, which do not trigger incrementation of the CC.

Table 600 may be stored in the ECU. The originating node may be identified using information, such as serial ID, PEC seed value, MAC header information, as described above. After data is determined to be received from Node1 after the fourth command, the ECU can match the data payload to specific BMS monitor based on the corresponding CC value. For example, if a payload has a CC value of 7, then the ECU may match that payload to BMS2 because the expected CC value for BMS2 is 7 at that point.

In some examples, the expected script CC increments may be set for different types of scripts using a template fashion. For example, a base script template may have a CC increment value of 10, an auxiliary script A template may have a CC increment value of 3, an auxiliary script B template may have a CC increment value of 5, and auxiliary script D template may have CC increment value of 4.

In some examples, if two scripts of the same size (e.g., two auxiliary scripts A) are set to be executed, a dummy command may be inserted into one of the scripts so that one of the scripts changes its CC increment size to a different value. The dummy command may increment the CC when executed but may not generate any results. For example, script 1 and script 2 may both belong to auxiliary script B so that they each have CC increment value (length) of 5. A dummy command may be inserted into script 2 to increase its increment value to 6. Therefore, the ECU may not only match the originating battery monitor source based on the CC value but may also track if the scripts are properly executed using the CC values.

### Various Notes

Each of the non-limiting aspects above can stand on its own or can be combined in various permutations or combinations with one or more of the other aspects or other subject matter described in this document.

The above detailed description includes references to the accompanying drawings, which form a part of the detailed description. The drawings show, by way of illustration, specific implementations in which the invention can be practiced. These implementations are also referred to generally as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other implementations can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed implementation. Thus, the following claims are hereby incorporated into the Detailed Description as examples or implementations, with each claim standing on its own as a separate implementation, and it is contemplated that such implementations can be combined with each other in various combinations or permutations. The scope of the invention should be determined with reference to the appended claims, along with the full scope of equivalents to which such claims are entitled.

## Claims

1. A method for communicating in a wireless battery management system, the method comprising:
executing, by a plurality of battery monitors, a first script, wherein the first script includes a first set of commands;
generating, by the plurality of battery monitors, measurement data for a battery in response to executing the first script;
generating, by the plurality of battery monitors, messages with the measurement data, wherein each message includes a data portion and a command counter portion that is incremented by the execution of a subset of the first set of commands in the first script, wherein an initial value of the command counter for each battery monitor of the plurality of battery monitors is set to a different initial value based on a command counter offset;
consolidating, by a wireless node, the messages to generate a consolidated message, wherein the wireless node is coupled to the plurality of battery monitors via a serial wired connection;
transmitting, by the wireless node, the consolidated message to a host system using a wireless connection, wherein the host system stores expected command counter values for each of the battery monitors after the subset of the first set of commands in the first script;
wherein the host system identifies at least one battery monitor source of the measurement data based on matching the respective command counter portion with one or more of the expected command counter values.

2. The method of claim 1, wherein the subset of commands includes one or more non-read and non-reset commands.

3. The method of any preceding claim, further comprising:
encrypting, by the wireless node, the consolidated message, wherein the encrypted message is transmitted to the host system.

4. The method of claim 3, wherein the encrypted message includes safety protocol data units intact from the plurality of battery monitors.

5. The method of any preceding claim, further comprising:
receiving, by the wireless node, the first script from the host system.

6. The method of any preceding claim, further comprising:
executing, by the plurality of battery monitors, a second script, wherein the second script includes a second set of commands, and wherein the second script includes a dummy command to increase a length of the second script to be greater than the first script.

7. The method of any preceding claim, wherein each of the plurality of battery monitors is coupled to a respective battery module of the battery.

8. A wireless battery management system comprising:
a plurality of battery monitors configured to:
execute a first script, wherein the first script includes a first set of commands;
generate measurement data for a battery in response to executing the first script;
generate messages with the measurement data, wherein each message includes a data portion and a command counter portion that is incremented by the execution of a subset of the first set of commands in the first script, wherein an initial value of the command counter for each battery monitor of the plurality of battery monitors is set to a different initial value based on a command counter offset;
a wireless node coupled to the plurality of battery monitors via a serial wired connection consolidating, wherein the wireless node is configured to:
generate a consolidated message of the messages generated by the plurality of battery monitors;
transmit the consolidated message to a host system using a wireless connection; and
the host system configured to:
store expected command counter values for each of the battery monitors after the subset of the first set of commands in the first script; and
identify at least one battery monitor source of the measurement data based on matching the respective command counter portion with one or more of the expected command counter values.

9. The wireless battery management system of claim 8, wherein the subset of commands includes one or more non-read and non-reset commands.

10. The wireless battery management system of claim 8 or claim 9, wherein the wireless node is further configured to:
encrypt the consolidated message, wherein the encrypted message is transmitted to the host system.

11. The wireless battery management system of claim 10, herein the encrypted message includes safety protocol data units intact from the plurality of battery monitors

12. The wireless battery management system of any of claims 8 to 11, wherein the wireless node is further configured to:
receive the first script from the host system.

13. The wireless battery management system of any of claims 8 to 12, wherein plurality of battery monitors are further configured to:
execute a second script, wherein the second script includes a second set of commands, and wherein the second script includes a dummy command to increase a length of the second script to be greater than the first script.

14. The wireless battery management system of any of claims 8 to 13, wherein each of the plurality of battery monitors is coupled to a respective battery module of the battery.

15. The wireless battery management system of any of claims 8 to 14, wherein each of plurality of battery monitors are respective integrated circuits.
